# EUROPEAN PATENT APPLICATION

(11) **EP 2 061 228 A1**
(43) Date of publication of application: **20.05.2009**
(21) Application number: 08167528.2
(22) Date of filing: 24.10.2008
(51) Int. Cl.: H04N 5/00, H04N 7/173

(54) **Process and system for pre-downloading video event data**

(30) Priority: 31.10.2007 US 933265
(71) Applicant: Echostar Technologies Corporation, Englewood, CO 80112 (US)
(72) Inventor: Kummer, David A., Highlands Ranch, CO 80126 (US)
(74) Representative: Needle, Jacqueline

(57) **Abstract**

A process of pre-downloading video event data to a client includes selecting the video event data (S300) prior to its availability for viewing, or receiving a selection of video event data (S400) from a client device to select such data prior to its availability. The pre-selected data is downloaded (S700) to a client device at least by a specified time. At the specified time, the downloaded video event data is rendered viewable (S800). The video event data, for example, may be a movie, and the specified time might be the time at which DVDs on which the movie is recorded are released. It can be ensured that the entire movie has been downloaded by the specified time so that the movie is immediately available on release.

## Description

The present invention relates to a process and system for pre-downloading video event data.

For example, embodiments of the invention relate generally to pre-downloading video event data to a client device, such as a set top box (STB), a digital video recorder (DVR) or similar device. Pay-per-view (PPV) and/or video-on-demand (VOD) content may be pre-downloaded to a hard drive of such client devices.

Various subscription-based services provide additional media content, other than scheduled program content and non-program content , such as advertising, that is generally available to a plurality of client devices for display. The additional media content, referred to herein as "video event data," may include various content that is intended to generate revenue associated with the actual viewing of the content by the user of the client device. Exemplary content includes movies, concerts, sporting events, etc., is commonly provided to a client device, ordered, for example, as a PPV or a VOD, and incurs a specific charge to the user of the client device. Thus, video event data may be distinguished from scheduled programming, which may be viewable at client devices based on the subscription characteristics of the individual client devices, by being viewable/recordable only at a specific client device or specific client devices that have selected to be able to view the video content data in addition to the regular subscription.

Signals providing additional video content may be transmitted via cables or wirelessly (for example, by satellite), as is well known in the art. The signals may be transmitted to the client device at one or more preset airing times or may be transmitted to the client device and stored for later viewing. The additional video content is typically selected by the user of the client device from a list of available selections, either after downloading or to initiate downloading. Downloading of such data may be accomplished, for example, using free bandwidth of a mixed transponder channel.

The present invention seeks to provide for pre-ordering of video event data in various circumstances.

According to a first aspect of the present invention there is provided a process of pre-downloading video event data to a client device, comprising:
selecting video event data prior to its availability for viewing or receiving a selection from a client device to select video event data prior to its availability for viewing;
downloading the pre-selected video event data to the client device at least by a specified time; and
rendering the downloaded video event data viewable at the specified time.

Embodiments of processes of the invention enable video event data, such as PPV, VOD and the like, to be pre-ordered by a user of a client device. The pre-ordered video event data can be stored at the client device to avoid the need to download the entire video event data prior to being available for viewing at the client device. Thus, embodiments of the invention have the advantage that they avoid a delay in the availability of the video event data for viewing.

Some video event data, such as movies, is released to various providers in a sequence that is intended to maximize revenue generation from the video event data. Embodiments of the invention have the advantage that they allow the availability of the video event data for viewing to be set to a specified time.

Users of client devices may not wish to consistently review a changing list of video event data that may be ordered. Embodiments of the invention have the advantage that they provide suggestions of video event data that may be pre-ordered at a client device, particularly suggestions that are relevant and/or of interest to a user of the client device.

Embodiments of the invention may provide pre-downloading of video event data, such as pay-per-view (PPV), video-on-demand (VOD) and the like.

In an embodiment of the invention as defined above, the specified time is a window with a start time and an end time.

Additionally and/or alternatively, the specified time is based on a release date of the video event data on a physical recording medium. For example, the video event data may comprise a movie. The specified time may, for example, be based on a retail release date of the movie on a physical recording medium, such as a digital versatile disk (DVD).

In an embodiment, downloading the pre-selected video event data comprises selecting a transmission of the video event data, thus allowing the video event data to be downloaded to the client device at least by the specified time. The selection may be made by the client device with or without user input.

Preferably, downloading the pre-selected video event data may comprise downloading additional data related to the video event data.

Such additional data may include one or more of: a menu of options for controlling presentation of the video event data; derivative video data; purchase information for an item related to the video event data; and/or purchase information for related video event data. For example, the additional data may be configured to mimic the look and feel of a digital video disk (DVD).

In an embodiment, the related video event data comprises video event data to be downloaded to the client device. Additionally and/or alternatively, the related video event data may comprise a physical recording medium on which the related video event data is recorded. The physical recording medium may have been provided in some manner other than downloading, for example, be sent by post.

Preferably, the item comprises one or more of a toy, a game, clothing, artwork and/or a physical recording medium with the video event data recorded thereon. In an embodiment, the purchase information comprises a link and/or a telephone number.

In an embodiment, selecting video event data comprises selecting video event data based on at least one of a user profile and a user preference associated with the client device. The selection may be made automatically. For example, the user profile or the user preference may be determined at least partly based on past selections of video event data at the client device.

If required, the process may further comprise providing a suggestion of video event data to select to the client device based on at least one of a user profile and a user preference associated with the client device. In an embodiment, the user profile or the user preference is determined at least partly based on past selections of video event data at the client device. The selection may be done either by the client or by the device on behalf of the client. In general, the suggestion of video event data may be available for downloading by the client, downloading by the client device and/or pushing by the content provider.

The present invention also extends to a system for pre-downloading video event data to a client device, comprising:
at least one of:
   a processor arranged to select video event data prior to its availability for viewing; and
   a client device arranged to select video event data prior to its availability for viewing; and
a processor arranged to download the pre-selected video event data to the client device at least by a specified time and arranged to render the downloaded video event data viewable at the specified time.

In an embodiment, the specified time is based on a release date of the video event data on a physical recording medium. For example, the video event data may comprise a movie. The specified time may be based on a release date of the movie on a physical recording medium.

In an embodiment, the processor arranged to download the pre-selected video event data is arranged to select a transmission of the video event data that allows the video event data to be downloaded to the client device at least by the specified time.

Preferably, the processor arranged to download the pre-selected video event data is arranged to download additional data related to the video event data.

The additional data may comprise one or more of: a menu of options for controlling presentation of the video event data; derivative video data; purchase information for an item related to the video event data; and/or purchase information for related video event data.

In an embodiment, the item may comprise at least one of a toy, a game, clothing, artwork and a physical recording medium with the video event data recorded thereon. Preferably, the purchase information may comprise one or more of a link and/or a telephone number. For example, the purchase information may comprise an Internet Protocol (IP) link and/or a telephone number.

In an embodiment, the related video event data comprises video event data to be downloaded to the client device and/or a physical recording medium with the related video event data recorded thereon. The physical recording medium may be sent, for example, posted to the client.

In an embodiment, the processor arranged to select video event data is arranged to select video event data based on at least one of a user profile and a user preference associated with the client device.

Preferably, the processor arranged to select video event data is arranged to determine the user profile or the user preference based on past selections of video event data at the client device.

In an embodiment, the system further comprises a processor arranged to provide a suggestion of video event data to select to the client device based on at least one of a user profile and a user preference associated with the client device. Preferably, the processor arranged to provide a suggestion of video event data to select is arranged to determine the user profile or the user preference based on past selections of video event data at the client device.

According to a further aspect of the present invention there is provided a computer-readable storage medium including instructions for: at least one of selecting video event data prior to its availability for viewing; and receiving a selection from a client device to select video event data prior to its availability for viewing; downloading the pre-selected video event data to the client device at least by a specified time; and rendering the downloaded video event data viewable at the specified time.

It will be appreciated that embodiments of the invention enable pre-ordering of video event data such that the entire video event data is downloaded to a client device to make the video event data available for viewing immediately upon a specified time being reached. Embodiments of the invention also enable suggestions of video event data that may be pre-ordered to be provided at a client device and/or video event data that may be of interest to a user may be downloaded to the client device prior to selection by the user.

Embodiments of the present invention will hereinafter be described, by way of example, with reference to the accompanying drawings, in which:
Figure 1 is a flowchart illustrating a process of pre-downloading video event data; and
Figure 2 is a block diagram of a system for pre-downloading video event data.

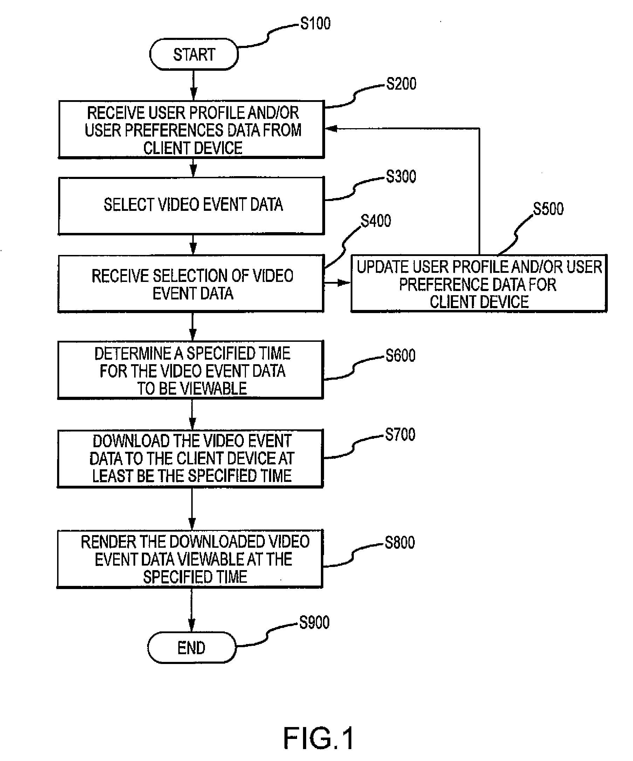

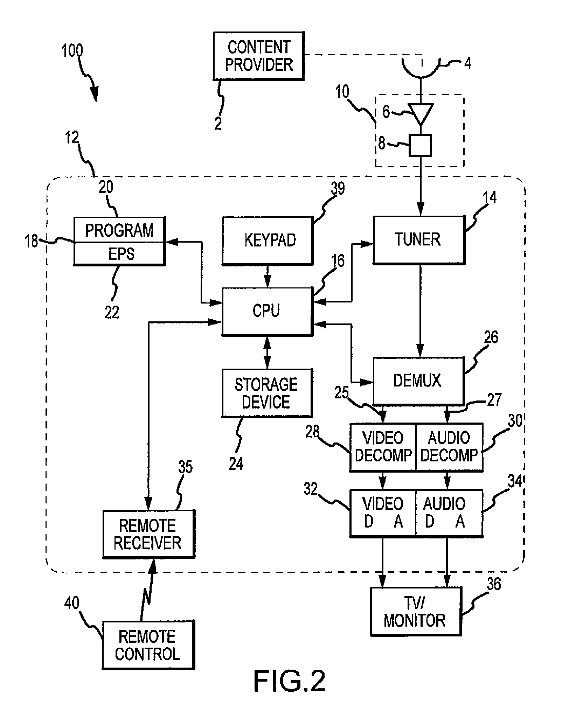

The flowchart shown in Figure 1 and the block diagram shown in Figure 2 are for illustration only and are not intended to represent the only possible process flows and system configurations. In particular, it should be understood that process operations may be added, omitted and reordered as may be suitable to a particular application. Also, individual components may be added, omitted, replaced and interrelated as may be suitable to a particular application. All details appurtenant to implementing the exemplary processes and systems that are well understood in the art are omitted for simplicity and clarity.

The embodiments shown in the figures illustrate processes and systems that may provide or facilitate pre-downloading of video event data to a client device. Such video event data may be pre-downloaded to a client device based on a user profile and/or user preferences associated with the client device. Alternatively or additionally, such video event data may be pre-downloaded to a client device in response to a user past selection at the client device.

An example of a process of pre-downloading video event data is illustrated by the flowchart shown in Figure 1. The process may begin in operation S100. In operation S200, user profile data and/or user preferences data may be received. The user profile data and/or the user preferences data may be received by a content provider that provides video content to client devices, as is well known in the art, or may be received by any other suitable device that includes a storage device for storing the data and/or a processor configured to process the data. The user profile data and/or user preferences data may be used to select video event data to be transmitted or otherwise downloaded to the client device, as illustrated in operation S300.

For example, based on the user profile data and/or the user preferences data, specific video event data may be "pushed" or downloaded without a client request or selection. The specific video event data may be selected as being more likely to appeal to the user of the client device and thus more likely to be selected by the user of the client device for viewing. This may provide a more efficient way of pushing video event data to a specific client device, as compared to pushing video event data to a plurality of client devices, for example, based on anticipated demand or popularity of the video event data.

The user profile data and/or the user preferences data may be obtained by any suitable method, either known or hereafter developed. For example, user profile and/or preferences data may be provided by the user by completing a form for establishing a subscription service or for activating or registering the client device. Alternatively or additionally, user profile and/or preferences may be established and/or updated based on viewing and/or ordering habits of the user. For example, video content viewed at the client device may be tracked and analyzed to help determine user profile and/or preferences data.

Alternatively or additionally to operation S300, a selection of video event data may be received in operation S400. For example, a user may select video event data from a list of video event data that is available from the content provider. Such a list may be provided as part of an electronic program guide (EPG) or any other suitable presentation to the user via the client device. Alternatively or additionally, such a list my be provided separate from the client device, such as in written form. The selection of video event data may be received from the client device itself or via any other suitable device, such as by telephone, the Internet or any other suitable network.

In the embodiment shown, the selection of video event data may be used to update user profile and/or preferences data for the client device in operation S500. It should be understood that this is not the only manner contemplated for generating and/or updating user profile and/or preferences data, as discussed above. For example, such updating may occur once the video event data is actually viewed from the client device, thereby taking into account a number of times the video event data is viewed.

In operation S600, a specified time for the video event data to be viewable may be determined. It should be understood that this operation is optional and that the video event data may be viewable immediately upon receipt by the client device. The specified time may be preset, for example, based on a release date of a DVD containing the video event data. In particular, the specified time may be set so that the video event data is viewable as soon as the DVD is released or ships. Of course, any specified time may be set as appropriate or desired. For example, the specified time may be set based on an end of a first run in theaters for a movie or based on a preset time after live performances of concerts or sporting events.

The specified time for the availability of the video event data for viewing at the client device may set a deadline for downloading the video event data to the client device. Thus, in operation S700, the video event data is downloaded to the client device at least by the specified time. The video event data may be downloaded to the client device at any time prior to the specified time. As such, the client device and/or the content provider may select a time prior to the specified time for downloading the video event data so that the entire video event data is downloaded by the specified time. This may allow the time of downloading to be more convenient and/or more efficient for the client device and/or the content provider. For example, the download of the video event data may be scheduled for a time when the client device and/or the content provider is inactive or less actively transmitting/receiving data. Also, the download of the video event data may be scheduled for a time that allows multiple client devices to receive the video event data.

In operation S800, the video event data may be rendered viewable at the specified time. This may be accomplished, for example, by a signal from the content provider to the client device or may be set by a code transmitted to the client device with the video event data. It should be understood, however, that any known or hereafter developed approach to disabling/enabling viewing of video event data may be used.

The process may end in operation S900. It should be understood that the flowchart of Figure 1 does not illustrate loops of the process for the sake of simplicity and clarity. For example, the various operations may occur in whole or in part at the content provider and/or the client device with exchange of data as appropriate or desired. As the flowchart of Figure 1 is only illustrative, it should be understood that the process may be streamlined or enhanced as desired for a given application.

Further, although not illustrated as a separate operation, additional data related to the video event data may be downloaded to the client device. Such additional data may be transmitted with or as part of the video event data, or may be transmitted separately. The additional data may provide various features and/or enhancements for the video event data. For example, the additional data may provide various features that may be provided on a DVD of video event data, and thus provide the user of the client device with a "DVD" experience at the client device.

In particular, the additional data may provide a menu of options for controlling presentation of the video event data. Alternatively or additionally, the additional data may provide derivative video data, such as a "the making of ..." video, a "behind the scenes" video, video outtakes, deleted scenes, sub-feature video, and the like that is based at least in part on the video event data. The additional data may provide purchase information for an item related to the video event data, such as toys, games, clothing, artwork, DVDs including the video event data, or other merchandise associated with the video event data.

In addition to traditional merchandising associated with movies, concerts, sporting events, etc., the additional data may provide purchase information for other items featured in the video event data. For example, if the video event data includes a particular make of automobile or a particular brand of clothing, the additional data may provide information regarding purchase of the automobile or clothing.

Further, the additional data may provide purchase information for related video event data. Such related video data may be video event data that may be purchased, for example, on DVD or other physical recording media, or by downloading to the client device, such as a separate PPV or VOD. Regardless of the type of purchase information, the purchase information may comprise a link and/or a telephone number. It should also be understood that the other types of additional data may be stored on the client device as a link to particular data, as opposed to storing the particular data on the client device.

Figure 2 is a block diagram that illustrates various components that may be employed in a system 100 for pre-downloading of video event data. The system 100 may include a suitable programming source or content provider 2, such as a direct broadcast satellite (DBS) system. The content provider 2 may be any known or hereafter developed device or system that is capable of transmitting or otherwise providing data from a central source to a plurality of client devices. Examples of known systems include cable and satellite broadcasting systems, or IP delivery systems, including DSL, cable, Wi-Max, and other such systems.

As shown, a satellite antenna 4 may be configured to receive/transmit signals from/to the content provider 2 to exchange data therewith. For satellite signals, for example, front end processing of may be accomplished by a low noise block converter feed (LNBF) provided in the antenna focal point, for example, including a converter module 10 with a low noise amplifier 6 that receives signals and uses a down converter 8 to convert the entire frequency band of the satellite signals to a lower frequency range for efficient transmission via coaxial cable to a client device 12, such as a satellite receiver.

The client device 12 may be any known or hereafter developed device or system that is capable of receiving, processing and displaying data. Although no known systems may currently have the particular functionalities or capabilities for implementing all aspects contemplated in this disclosure, only slight modifications in hardware and/or software may be necessary in some cases to implement various features. Thus, only general components are described herein.

The client device 12 may include a tuner 14 configured to select a specific channel frequency having a group of channels from the signal. The client device 12 may also include a demultiplexer 26 that is configured to select a specific channel from the group of channels and route data to various components within the client device 12. Compressed video and audio may be output from the demultiplexer 26 to video and audio decompressers 28, 30 and video and audio digital-to-analog converters 32, 34, which provide decompressed video and audio to a television or monitor 36 for display. Data may also be output from the demultiplexer 26 to a central processing unit 16 or other processor, which may process the data for storage in a memory 18 or a storage device 24.

The memory 18 may include an electronic program guide (EPG) 22 comprising a database containing information including names or titles of programs or video events, corresponding channel numbers and names, brief descriptions of the programs or video events, start and finish times, and rating and content information related to the programs or video events, as is known in the art. The memory 18 may also contain a program 20 for controlling the CPU 16. As a limited part of this functionality, the program 20 may, for example, control storage to or retrieval from memory 18, operation of the EPG 22, and so forth.

The storage device may comprise a hard drive, for example, when the client device 12 is a digital video recorder (DVR), or any other suitable device that is capable of storing data. In some embodiments, the client device may be configured such that the CPU 16 may execute programs off the storage device or from memory, such as video event data and/or program data.

A user may manipulate the client device 12 via a keypad 39 that communicates with the CPU 16 or via a remote control device 40 that communicates with the CPU 16 via a remote receiver 35 of the client device 12.

The system 100 may be used to implement any of the processes described above with respect to Figure 1, each component carrying out operations of the processes as necessary. It should be understood that the interconnections or links between components may be implemented in any suitable manner, including wired, wireless, data bus, and the like. Further, the particular configuration illustrated only exemplary and is intended for understanding rather than to be limiting. As such, it should be understood that the various components illustrated in Figure 2 may be implemented as hardware or as a software program as appropriate or desired to execute the various functions described herein. It should also be understood that each of these components may be separate devices or integrated as a single device. Further, it should be understood that the block diagram of Figure 2 is a simplified representation of a system, and that various details for implementation may be based on systems already known in the art.

In some embodiments, the content provider 2 may include a processor (not shown) that is configured to select video event data prior to its availability for viewing. As discussed above, such a processor may be configured to select video event data based on a user profile or a user preference (i.e., user profile/preferences data) that is associated with the client device 12. Further, the processor may be configured to determine the user profile or the user preference based on past selections of video event data at the client device 12.

The content provider 2 may further include a processor that is configured to provide a suggestion of video event data to select to the client device 12 based on a user profile or a user preference (i.e., user profile/preferences data) associated with the client device 12. The processor may be the same processor, for example, configured to select video event data. The selected video event data and/or the suggestion may be communicated to the client device by any suitable method, such as broadcast, satellite link, IP connection, PSTN, hardwired link, etc.

In some embodiments, the CPU 16 of the client device 12 may be configured to select video event data prior to its availability for viewing. In particular, such selection may be by the user via the keypad 39 or the remote control 40, for example, based on a list contained in the EPG 22. The selection may be transmitted to the content provider 2 via the antenna 4 or a separate transmission device (not shown).

The processor of the content provider 2 may also be a processor that is configured to download the pre-selected video event data to the client device 12 at least by a specified time and configured to render the downloaded video event data viewable at the specified time. Alternatively, the CPU 16 of the client device 12 may be configured to download the pre-selected video event data and/or to render the downloaded video event data viewable, as appropriate or desired. In any case, the processor that is configured to download the pre-selected video event data may be configured to select a transmission of the video event data that allows the video event data to be downloaded to the client device 12 at least by the specified time. For example, specific video event data may have a plurality of scheduled transmissions. The processor may thus select one of the scheduled transmissions that will allow a full download by the specified time, for example, to optimize operation of the content provider 2 and/or the client device 12.

Although various details of the present invention herein have been described with reference to particular embodiments, it is to be understood that these embodiments are merely illustrative. It will be appreciated that variations in, and modifications to, the embodiments described and illustrated may be made within the scope of the present invention as defined in the accompanying claims.

## Claims

1. A process of pre-downloading video event data to a client device, comprising:
selecting video event data prior to its availability for viewing or receiving a selection from a client device to select video event data prior to its availability for viewing;
downloading the pre-selected video event data to the client device at least by a specified time; and
rendering the downloaded video event data viewable at the specified time.

2. A process as claimed in Claim 1, wherein the specified time is a window with a start time and an end time.

3. A process as claimed in Claim 1 or Claim 2, wherein the specified time is based on a release date of the video event data on a physical recording medium.

4. A process as claimed in any preceding claim, wherein downloading the pre-selected video event data comprises the client device selecting a transmission of the video event data that allows the video event data to be downloaded to the client device at least by the specified time.

5. A process as claimed in any preceding claim, wherein downloading the pre-selected video event data comprises downloading additional data related to the video event data.

6. A process as claimed in Claim 5, wherein the related video event data comprises video event data to be downloaded to the client device and/or a physical recording medium with the related video event data recorded thereon.

7. A process as claimed in any preceding claim, wherein selecting video event data comprises selecting video event data based on a user profile and/or a user preference associated with the client device.

8. A process as claimed in any preceding claim, further comprising providing, to the client device, a suggestion of selectable video event data based on a user profile and/or a user preference associated with the client device.

9. A system for pre-downloading video event data to a client device, comprising:
at least one of:
a processor arranged to select video event data prior to its availability for viewing; and
a client device arranged to select video event data prior to its availability for viewing; and
a processor arranged to download the pre-selected video event data to the client device at least by a specified time and arranged to render the downloaded video event data viewable at the specified time.

10. A system as claimed in Claim 9, wherein the processor arranged to download the pre-selected video event data is arranged to select a transmission of the video event data that allows the video event data to be downloaded to the client device at least by the specified time.

11. A system as claimed in Claim 9 or Claim 10, wherein the processor arranged to download the pre-selected video event data is arranged to download additional data related to the video event data.

12. A system as claimed in Claim 11, wherein the related video event data comprises video event data to be downloaded to the client device and/or a physical recording medium with the related video event data recorded thereon.

13. A system as claimed in any of Claims 9 to 12, wherein the processor arranged to select video event data is arranged to select video event data based on at least one of a user profile and a user preference associated with the client device.

14. A system as claimed in any of Claims 9 to 13, further comprising a processor arranged to provide a suggestion of video event data to select to the client device based on a user profile and/or a user preference associated with the client device.

15. A computer-readable storage medium including instructions for:
at least one of:
selecting video event data prior to its availability for viewing; and
receiving a selection from a client device to select video event data prior to its availability for viewing;
downloading the pre-selected video event data to the client device at least by a specified time; and
rendering the downloaded video event data viewable at the specified time.
